# EUROPÄISCHE PATENTSCHRIFT

(11) **EP 1 672 702 B1**
(45) Veröffentlichungstag und Bekanntmachung des Hinweises auf die Patenterteilung: **05.10.2011**
(21) Anmeldenummer: 04029825.9
(22) Anmeldetag: 16.12.2004
(51) Int. Cl.: H01L 31/048

(54) **Elektrische Anschluss- und Verbindungsdose für ein Solarzellenmodul**
Junction box for a solar cell modul
Boîte de jonction pour un module de cellule solaire

(43) Veröffentlichungstag der Anmeldung: 21.06.2006
(73) Patentinhaber: Günther Spelsberg GmbH & Co. KG, 58579 Schalksmühle (DE)
(72) Erfinder: Nieleck, Udo, 58791 Werdohl (DE); Quardt, Dirk, Dipl.-Ing., 58638 Iserlohn (DE); Wasserfuhr, Friedel, Dipl.-Ing., 51688 Wipperfürth (DE); Zborowski, Zbigniew, Dipl.-Ing., 58509 Lüdenscheid (DE)
(74) Vertreter: Michalski Hüttermann & Partner Patentanwälte

(56) Entgegenhaltungen:
- EP-A- 0 867 947
- EP-A- 1 041 647
- EP-A- 1 289 069
- US-A- 5 503 684

## Beschreibung

Die Erfindung betrifft eine elektrische Anschluß- und Verbindungsdose für ein Solarzellenmodul aus mit dünnen Leiterbändern angeschlossenen Solarzellen, mit einem Gehäuse und in dem Gehäuse vorgesehenen elektrischen oder/und elektronischen Einrichtungen sowie einer in dem Gehäuse vorgesehenen Anschlußvorrichtung.

Da die Ausgangsspannung einzelner Solarzellen im allgemeinen zu gering ist, um elektrische Geräte, wie Haushaltsgeräte oder ähnliche Geräte, zu betreiben, werden im allgemeinen mehrere Solarzellen zu Solarzellenmodulen zusammengeschaltet. Dabei besteht einerseits die Möglichkeit der Reihenschaltung der Solarzellen und andererseits die Möglichkeit der Parallelschaltung der Solarzellen im Solarzellenmodul. Durch ein Parallelschalten der Solarzellen addieren sich die einzelnen Ströme der Solarzellen zu einem Gesamtstrom. Dabei sollten die parallelgeschalteten Solarzellen allerdings im wesentlichen die gleichen physikalischen Eigenschaften haben, so daß sich in der Praxis das Parallelschalten von Solarzellen kaum durchgesetzt hat, insbesondere auch da eine einzelne Solarzelle bereits einen Strom von einigen Ampere liefern kann.

Bei der Zusammenstellung von Solarzellenmodulen mit einzelnen Solarzellen werden die Solarzellen daher häufig in Reihe geschaltet. Ein Problem kann sich dabei jedoch dann ergeben, wenn ein Solarzellenmodul partiell abgeschattet wird, also eine Solarzelle oder einzelne Solarzellen des Solarzellenmoduls weniger oder gar keine Sonnenbestrahlung erhalten. Der Grund für eine verringerte Sonnenbestrahlung kann z. B. in einer Verschmutzung der Solarzellen oder in Schattenwürfen von Bäumen, Gebäudeeinrichtungen oder Gebäuden liegen.

Im Gegensatz zu einer Abschattung des Solarmoduls gleichmäßig über seine gesamte Fläche, die nur zu einer Leistungsverringerung insgesamt führt, ergibt sich bei einer partiellen Abschattung folgendes Problem: Durch die in Reihe geschalteten Solarzellen des Solarzellenmoduls fließt ein gemeinsamer Strom, wobei jede einzelne Solarzelle mit ihrer jeweiligen Spannung zur Gesamtspannung des Solarzellenmoduls beiträgt. Wird nun eine Solarzelle abgeschattet, so erzeugt diese keine Spannung mehr und setzt dem Stromfluß im Solarzellenmodul praktisch eine Diode in Sperrichtung entgegen. Dies bedeutet jedoch, daß das gesamte Modul keinen Strom mehr liefern kann, so daß die gesamte Funktion des Solarzellenmoduls beeinträchtigt ist.

Außerdem gilt, daß an der abgeschatteten Solarzelle eine Spannung anliegt, die abhängig ist von der Position der abgeschatteten Solarzelle in der Reihenschaltung. Ist diese an der abgeschatteten Solarzelle anliegende Spannung größer als ihre Sperrspannung, so wird es in der Solarzelle zu einem Durchschlag und damit zu einer dauerhaften Beschädigung der Solarzelle kommen. Selbst wenn es zu keiner Beschädigung der Solarzelle durch einen Durchschlag kommen sollte, wird in der abgeschatteten Solarzelle eine große Verlustleistung umgesetzt, so daß sich die abgeschattete Solarzelle aufheizt. Auch eine solche Aufheizung kann zu Beschädigungen an der abgeschatteten Solarzelle sowie an den ihr benachbarten Solarzellen führen.

Um die mit teilweise abgeschatteten Solarzellen verbundene Problematik zu vermeiden, werden häufig Dioden, sogenannte Bypass-Dioden, verwendet, die antiparallel zu den Solarzellen geschaltet werden. Auf diese Weise wird erreicht, daß eine abgeschattete Solarzelle zwar keinen Anteil mehr zur Gesamtspannung des Solarzellenmoduls leistet, der Stromfluß jedoch trotzdem erhalten bleibt. Das Solarzellenmodul zeigt somit lediglich eine verminderte Betriebspannung, fällt jedoch nicht vollständig aus. Außerdem wird in der abgeschatteten Solarzelle keine Leistung mehr umgesetzt, so daß eine Beschädigung der abgeschatteten Solarzelle vermieden werden kann.

Grundsätzlich könnte jeder Solarzelle eines Solarzellenmoduls genau eine Diode zugeordnet sein. Häufig wird jedoch so vorgegangen, daß eine Mehrzahl hintereinander geschalteter Solarzellen jeweils durch eine gemeinsame Diode abgesichert wird. Elektrische Anschluß- und Verbindungsdosen, die für Solarzellenmodule verwendet werden, weisen somit im allgemeinen immer nocheine Mehrzahl von Bypass-Dioden auf. Darüber hinaus können in den elektrischen Anschluß- und Verbindungsdosen weitere elektrische oder/und elektronische Einrichtungen vorgesehen sein, so daß der elektrischen Anschluß- und Verbindungsdose zugeführte Leiter mit den elektrischen oder/und elektronischen Einrichtungen, wie den Bypass-Dioden, verbunden werden müssen.

Die Solarzellen in einem Solarzellenmodul sind im allgemeinen mit dünnen Leiterbändern, sogenannten Strings, miteinander verbunden. Diese Leiterbänder weisen typischerweise eine Dicke von wenigen Zehntel Millimeters (ca. 0,3 mm) und eine Breite von einigen Millimetern (ca. 3-8 mm) auf. Diese die einzelnen Solarzellen des Solarzellenmoduls miteinander verbindenden Leiterbänder werden aus dem Solarzellenmodul heraus geführt, so daß die dünnen Leiterbänder direkt zu Anschlußzwecken verwendet werden können.

Dazu werden die Leiterbänder typischerweise in eine solche elektrische Anschluß- und Verbindungsdose von unten her eingeführt, die einen abnehmbaren Deckel aufweist, so daß die einzelnen Leiterbänder von Hand in einer in dem Gehäuse der Anschluß- und Verbindungsdose vorgesehenen elektrischen Anschlußvorrichtung kontaktiert werden können. Dazu werden die vom Solarzellenmodul, relativ zum Gehäuse der Anschluß- und Verbindungsdose von unten her kommenden dünnen Leiterbänder im allgemeinen um 180° umgebogen, um dann von oben her kommend in der Anschlußvorrichtung angeschlossen zu werden. Ein solches Umbiegen ist ohne weiteres möglich, da die dünnen Leiterbänder, die typischerweise aus Metall bestehen, aufgrund ihrer Abmessungen, insbesondere nämlich ihrer geringen Dicke, sehr flexibel sind. Allerdings ist diese Vorgehensweise sehr aufwendig und zeitintensiv, und Anschlußfehler können nicht ohne weiteres vermieden werden.

Das Dokument EP-A-1 041 647 zeigt eine ähnliche elektrische Anschluss- und Verbindungsdose für ein Solarzellenmodul, bei der die Leiterbänder um 90° umgeknickt und an einer elektrischen Anschlussvorrichtung festgelötet werden.

Es ist daher die Aufgabe der Erfindung, eine solche elektrische Anschluß- und Verbindungsdose für ein Solarzellenmodul anzugeben, mit der ein einfacher und sicherer Anschluß aus dem Solarzellenmodul herausgeführter dünner Leiterbänder ermöglicht wird.

Ausgehend von der eingangs beschriebenen elektrischen Anschluß- und Verbindungsdose ist die zuvor hergeleitete und aufgezeigte Aufgabe durch.

Die Erfindung geht also einen völlig neuen Weg, indem eine elektrische Anschluß- und Verbindungsdose gemäß Anspruch 1 gelöst. aus dem Solarzellenmodul herausgeführte und zum Anschluß der Solarzellen dienende dünne Leiterbänder beim Aufsetzen der Anschluß- und Verbindungsdose auf das Solarzellenmodul einerseits automatisch, also ohne zusätzliche Handarbeit, und andererseits direkt von unten her in die elektrische Anschlußvorrichtung eingeführt werden. Durch die Erfindung wird damit das aufwendige, aus dem Stand der Technik bekannte Vorgehen vermieden, die dünnen Leiterbänder zum Anschließen der Solarzellen in der Anschluß- und Verbindungsdose erst nach oben zu führen und dann um bis zu 180° umzubiegen, um sie der Anschlußvorrichtung zuzuführen. Beim Anschließen der Solarzellen des Solarzellenmoduls ist der erforderliche Aufwand also durch die Erfindung erheblich verringert, und insbesondere können praktisch keine Falschkontaktierungen mehr vorkommen.

Gemäß der Erfindung ist unterhalb der Klemmeinrichtung eine Führungseinrichtung zum geführten Einführen der dünnen Leiterbänder in die Klemmeinrichtung beim Aufsetzen der Anschluß- und Verbindungsdose auf das Solarzellenmodul vorgesehen. Eine solche Führungseinrichtung dient im wesentlichen dazu, ein Knicken oder Falten der Leiterbänder beim Einführen zu vermeiden, so daß die in Längsrichtung der dünnen Leiterbänder wirkenden Kraft beim Einführen derselben in die Anschlußvorrichtung auch tatsächlich in die gewünschte Richtung wirkt und nicht zu einer Deformation, nämlich zu dem angesprochenen Knicken oder Falten der dünnen Leiterbänder führt. Dabei kann z. B. eine solche Führungseinrichtung vorgesehen sein, die den Querschnittsabmessungen der dünnen Leiterbänder entsprechende Öffnungen aufweist, so daß beim Aufsetzen der elektrischen Anschluß- und Verbindungsdose auf das Solarzellenmodul die dünnen Leiterbänder in diesen Öffnungen mit geringem Spiel geführt werden, die Innenwände der Öffnungen also der eigentlichen Führung und damit der Verhinderung des Knickens oder Faltens dienen.

Grundsätzlich sind für die erfindungsgemäße Anschluß- und Verbindungsdose verschiedene Typen von Anschlußvorrichtungen verwendbar. Gemäß einer bevorzugten Weiterbildung der Erfindung ist jedoch vorgesehen, daß die elektrische Anschlußvorrichtung eine Klemmeinrichtung aufweist. Dabei kann gemäß einer bevorzugten Weiterbildung der Erfindung insbesondere vorgesehen sein, daß die Klemmeinrichtung Anschlußfederelemente zur Herstellung eines Klemmkontakts mit den dünnen Leiterbändern aufweist. Diese Anschlußfederelemente weisen wenigstens eine Feder vorzugsweise jedoch zwei gegeneinander wirkende Federn, z. B. in Form von Blattfedern, auf, die aufgrund ihrer Federkraft auf die in die Anschlußvorrichtung eingeschobenen Leiterbänder wirken und damit den erforderlichen elektrischen Kontakt herstellen.

Der erfindungsgemäße Ansatz, daß die aus dem Solarzellenmodul herausgeführten dünnen Leiterbänder beim Aufsetzen der Anschluß- und Verbindungsdose auf das Solarzellenmodul einerseits automatisch und andererseits von unten her in die elektrische Anschlußvorrichtung eingeführt werden, eröffnet noch einen weiteren Vorteil. Gemäß einer bevorzugten Weiterbildung der Erfindung ist nämlich vorgesehen, daß das Gehäuse Seitenwände und einen Deckel aufweist, wobei die Seitenwände und der Deckel einstückig ausgebildet sind. Mit anderen Worten ist es bei der erfindungsgemäßen elektrischen Anschluß- und Verbindungsdose nicht mehr zwingend erforderlich, einen abnehmbaren Deckel vorzusehen. Schließlich erfolgt das Einführen der dünnen Leiterbänder in die Anschlußvorrichtung automatisch, so daß der Innenraum der elektrischen Anschluß- und Verbindungsdose nicht von oben her für ein Anschließen von Hand zugänglich sein muß.

Im einzelnen gibt es eine Vielzahl von Möglichkeiten, die erfindungsgemäße elektrische Anschluß- und Verbindungsdose auszugestalten und weiterzubilden, wozu einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. In der Zeichnung zeigt
- Fig. 1a - c: eine elektrische Anschluß- und Verbindungsdose für ein Solarzellenmodul gemäß einem bevorzugten Ausführungsbeispiel der Erfindung in einer Ansicht von oben, von der Seite bzw. von unten,
- Fig. 2a, b: perspektivische Ansichten der elektrischen Anschluß- und Verbindungsdose gemäß dem bevorzugten Ausführungsbeispiel der Erfindung, teilweise im Schnitt,
- Fig. 3: einen Schnitt durch die elektrische Anschluß- und Verbindungsdose gemäß dem bevorzugten Ausführungsbeispiel der Erfindung und
- Fig. 4: die Anschlußvorrichtung der elektrischen Anschluß- und Verbindungsdose gemäß dem bevorzugten Ausführungsbeispiel der Erfindung.

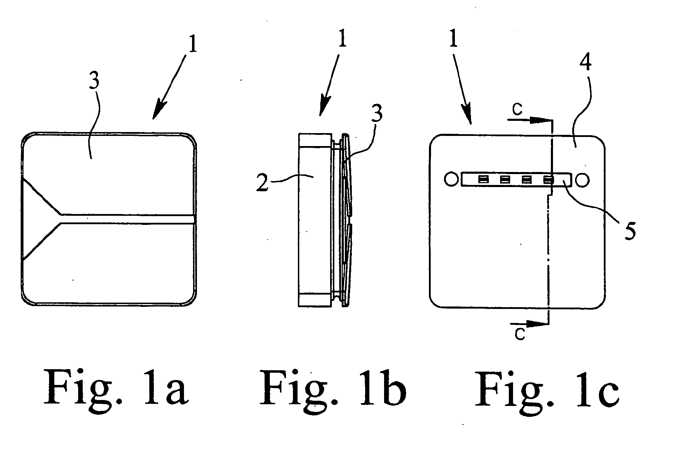

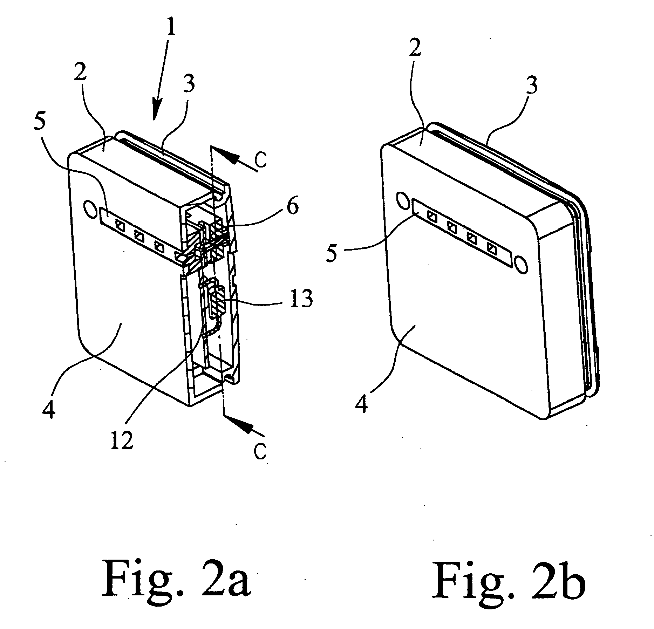

Wie aus Fig. 1 ersichtlich, weist die elektrische Anschluß- und Verbindungsdose gemäß dem bevorzugten Ausführungsbeispiel der Erfindung ein Gehäuse 1 mit Seitenwänden 2 und einen Deckel 3 auf. Weiterhin ist ein Boden 4 des Gehäuses 1 vorgesehen, der eine langgestreckte Ausnehmung 5 aufweist. Wie insbesondere Fig. 2a entnehmbar, ist über diese Ausnehmung 5 eine in dem Gehäuse 1 vorgesehene Anschlußvorrichtung 6 erreichbar.

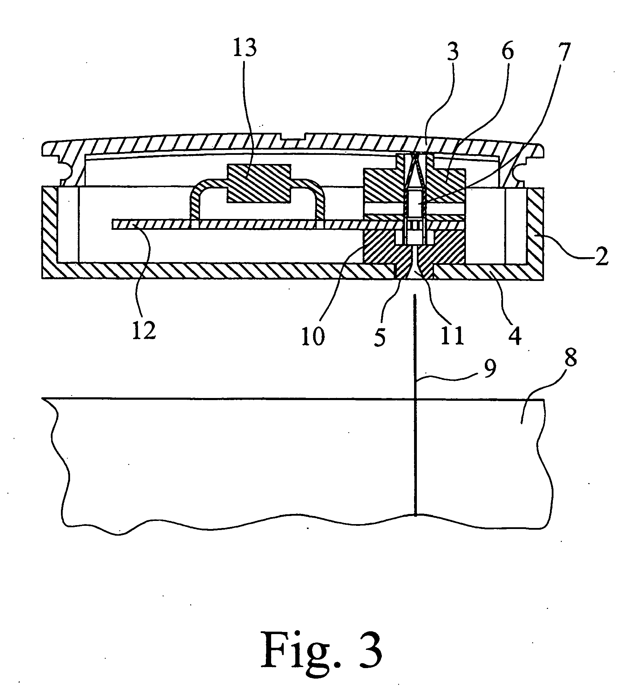

Wie diese Anschlußvorrichtung 6 im einzelnen ausgebildet und angeordnet ist, ist weiterhin Fig. 3 entnehmbar, die einen Schnitt durch die elektrische Anschluß- und Verbindungsdose gemäß dem bevorzugten Ausführungsbeispiel der Erfindung längs der Linie C-C zeigt. Fig. 3 ist dabei entnehmbar, daß die Anschlußvorrichtung 6 eine Klemmeinrichtung 7 in Form von zwei gegeneinanderwirkenden Federn aufweist. In diese werden beim Aufsetzen der elektrischen Anschluß- und Verbindungsdose gemäß dem bevorzugten Ausführungsbeispiel der Erfindung automatisch die auch aus Fig. 3 ersichtlichen aus dem Solarzellenmodul 8 herausgeführten dünnen Leiterbänder 9 eingeführt.

Um beim Einführen der Leiterbänder 9 in die Anschlußvorrichtung 6 ein Deformieren, insbesondere ein Umknicken oder Falten der Leiterbänder 9 zu vermeiden, ist in dem Gehäuse 1 unterhalb der Anschlußvorrichtung 6 eine Führungseinrichtung 10 vorgesehen. Diese weist eine im Querschnitt trichterförmige Einführungsöffnung 11 auf, die sich im Querschnitt verjüngt, so daß die Leiterbänder 9 in der Führungseinrichtung 10 mit geringem Spiel in Querrichtung geführt werden. Auf diese Weise wird ein Umknicken der Leiterbänder 9 beim Einführen in die Anschlußvorrichtung 6 vermieden, so daß die beim Aufsetzen der elektrischen Anschluß- und Verbindungsdose auf das Solarzellenmodul wirkende Kraft praktisch vollständig in Längsrichtung der dünnen Leiterbänder 9 wirken kann.

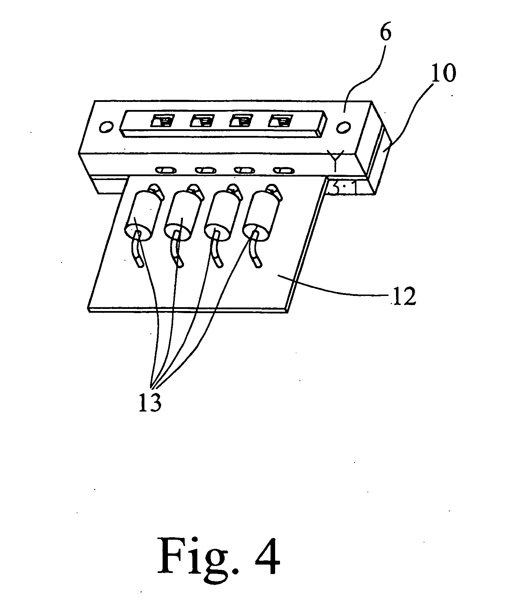

Wie Fig. 3 und insbesondere auch Fig. 4 entnehmbar, ist die Anschlußvorrichtung 6 mit einer Leiterplatte 12 verbunden, auf der eine Mehrzahl von Bypass-Dioden 13 angeordnet ist. Diese Bypass-Dioden 13 haben die eingangs beschriebene Funktion zur Absicherung der einzelnen Solarzellen und sind dazu über die Anschlußvorrichtung 6 und die dünnen Leiterbänder 9 mit den einzelnen Solarzellen des Solarzellenmoduls 8 verbunden.

Wie der obigen Beschreibung der elektrischen Anschluß- und Verbindungsdose gemäß dem bevorzugten Ausführungsbeispiel der Erfindung entnehmbar, geht die Erfindung einen völlig neuen Weg, indem die flexiblen dünnen Leiterbänder 9 nicht nur von unten her in das Gehäuse 1 der elektrischen Anschluß- und Verbindungsdose eingeführt werden, sondern auch direkt von unten her in die in dem Gehäuse 1 vorgesehen Anschlußvorrichtung 6 eingeführt werden. Dabei ist die Anschlußvorrichtung 6 derart angeordnet und ausgebildet, vorliegend insbesondere nämlich mit einer Führungseinrichtung 10 versehen, daß beim Aufsetzen der elektrischen Anschluß- und Verbindungsdose auf das Solarzellenmodul 8 automatisch eine Einführung der Leiterbänder 9 in die Anschlußvorrichtung 6 erfolgt. Damit wird das Anschließen der einzelnen Solarzellen des Solarzellenmoduls 8 deutlich erleichtert, und insbesondere können Fehlkontaktierungen vermieden werden.

## Patentansprüche

1. Elektrische Anschluß- und Verbindungsdose für ein Solarzellenmodul (8) aus mit flexiblen dünnen Leiterbändern (9) angeschlossenen Solarzellen, mit einem Gehäuse (1) und in dem Gehäuse (1) vorgesehenen elektrischen oder/und elektronischen Einrichtungen sowie einer in dem Gehäuse (1) vorgesehenen elektrischen Anschlußvorrichtung (6), **dadurch gekennzeichnet, daß** unterhalb der Anschlußvorrichtung (6) eine Führungseinrichtung (10) zum geführten Einführen der flexiblen dünnen Leiterbänder (9) in die Anschlußvorrichtung beim Aufsetzen der Anschluß- und Verbindungsdose auf das Solarzellenmodul (8) vorgesehen ist, wobei die Führungseinrichtung (10) eine trichterförmige Einführungsöffnung (11) aufweist, die sich im Querschnitt verjüngt, so daß die aus dem Solarzellenmodul (8) herausgeführten flexiblen dünnen Leiterbänder (9) beim Aufsetzen der Anschluß- und Verbindungsdose auf das Solarzellenmodul (8) ohne zusätzliche Handarbeit von unten her in die elektrische Anschlußvorrichtung (6) einführbar sind.

2. Elektrische Anschluß- und Verbindungsdose nach Anspruch 1, **dadurch gekennzeichnet, daß** die elektrische Anschlußvorrichtung (6) eine Klemmeinrichtung (7) aufweist.

3. Elektrische Anschluß- und Verbindungsdose nach Anspruch 2, **dadurch gekennzeichnet, daß** die Klemmeinrichtung (7) Anschlußfederelemente zur Herstellung eines Klemmkontaktes mit den flexiblen dünnen Leiterbändem (9) aufweist.

4. Elektrische Anschluß- und Verbindungsdose nach einem der Ansprüche 1 bis 3, **dadurch gekennzeichnet, daß** das Gehäuse (1) Seitenwände (2) und einen Deckel (3) aufweist, wobei die Seitenwände (2) und der Deckel (3) einstückig ausgebildet sind.

## Claims

1. Electrical junction and connection box for a solar cell module (8) comprising solar cells which are connected by flexible thin conductor strips (9), having a housing (1) and electrical and/or electronic devices which are provided in the housing (1) and also an electrical connection apparatus (6) which is provided in the housing (1), **characterized in that** a guide device (10) for the guided insertion of the flexible thin conductor strips (9) into the connection apparatus when the junction and connection box is fitted on the solar cell module (8) is provided beneath the connection apparatus (6), with the guide device (10) having a funnel-like insertion opening (11) which tapers in cross section such that the flexible thin conductor strips (9) which are routed out of the solar cell module (8) can be inserted into the electrical connection apparatus (6) from below without any additional manipulation when the junction and connection box is fitted on the solar cell module (8).

2. Electrical junction and connection box according to Claim 1, **characterized in that** the electrical connection apparatus (6) has a clamping device (7).

3. Electrical junction and connection box according to claim 2, **characterized in that** the clamping device (7) has connection spring elements for establishing a clamping contact-connection with the flexible thin conductor strips (9).

4. Electrical junction and connection box according to one of Claims 1 to 3, **characterized in that** the housing (1) has side walls (2) and a cover (3), with the side walls (2) and the cover (3) being of integral design.

## Revendications

1. Boîte de jonction et de raccordement électrique pour un module de cellules solaires (8) composé de cellules solaires raccordées à des rubans de conducteurs fins et souples (9), avec un boîtier (1) et avec des dispositifs électriques ou/et électroniques prévus dans le boîtier (1) ainsi qu'avec un dispositif de raccordement électrique (6) prévu dans le boîtier (1), **caractérisée en ce qu'**il est prévu en dessous du dispositif de raccordement (6) un dispositif de guidage (10) pour l'introduction guidée des rubans des conducteurs fins et souples (9) dans le dispositif de raccordement lors du montage de la boîte de jonction et de raccordement sur le module de cellules solaires (8), le dispositif de guidage (10) comportant une ouverture d'introduction (11) en forme d'entonnoir qui se rétrécit en section transversale de sorte que, lors du montage de la boîte de jonction et de raccordement sur le module de cellules solaires (8), les rubans de conducteurs fins et souples (9) guidés hors du module de cellules solaires (8) peuvent être introduits par en dessous, sans action manuelle supplémentaire, dans le dispositif de raccordement électrique (6).

2. Boîte de jonction et de raccordement électrique selon la revendication 1, **caractérisée en ce que** le dispositif de raccordement électrique (6) comporte un dispositif de serrage (7).

3. Boîte de jonction et de raccordement électrique selon la revendication 2, **caractérisée en ce que** le dispositif de serrage (7) comporte des éléments à ressort de raccordement pour établir un contact par serrage avec les rubans de conducteurs fins et souples (9).

4. Boîte de jonction et de raccordement électrique selon l'une des revendications 1 à 3, **caractérisée en ce que** le boîtier (1) comporte des parois latérales (2) et un couvercle (3), les parois latérales (2) et le couvercle (3) étant conçus d'une seule pièce.
